# EUROPEAN PATENT SPECIFICATION

(11) **EP 1 438 538 B1**
(45) Date of publication and mention of the grant of the patent: **30.12.2015**
(21) Application number: 02802080.8
(22) Date of filing: 22.10.2002
(51) Int. Cl.: F24F 11/00, F24F 11/04, F24F 11/047, F24F 11/053

(54) **COMPENSATING FOR TEMPERATURE**
TEMPERATURAUSGLEICH
DISPOSITIF DE TRAITEMENT DE L'AIR A COMPENSATION DE TEMPERATURE

(30) Priority: 23.10.2001 SE 0103519
(43) Date of publication of application: 21.07.2004
(73) Proprietor: PM-Luft AB, 535 23 Kvänum (SE)
(72) Inventor: BERG, Gunnar, S-521 30 Falköping (SE)
(74) Representative: Valea AB
(86) International application number: PCT/SE2002/001918
(87) International publication number: WO 2003/036182

(56) References cited:
- SE-C2- 500 361
- US-A- 3 192 848
- US-A- 4 369 030
- US-A- 5 341 988
- US-A1- 2001 007 337

## Description

### Technical field

The present invention relates to maintaining a desired mass flow in an air treatment apparatus independent of differences in outdoor temperature at the entrance of the fan/fan system of the air treatment apparatus, in particular at air treatment apparatuses being controlled by a control and managing system and comprising heat recovery in a heat exchanger having a off air fan where the temperature at the inlet of the fan varies.

### Background of the invention

The primary function of an air treatment apparatus is to provide a building and the people working and staying there with fresh air and to remove polluted, "odorous" air. The dimensioning is made due to flow volume at the density 1.2 kg/m3 (atmosphere pressure 101325 Pa, temperature 20°C, and relative humidity, RH, 40%), daily called the airflow. The fresh airflow is being tempered differently at different seasons and contributes to the thermo climate in the building. Further, sometimes functional parts are added regulating the humidity of the air and thereby the building. The main part of the air treatment apparatuses used in Northern Europe are provided with a heat recovery system to reduce energy consumption and the maximum effect need required to heat, and cool, respectively, the fresh air. Primarily three types of heat exchangers are used, viz. rotating heat exchangers, plate heat exchangers and battery heat exchangers.

Rotating heat exchangers have the highest temperature recovery yield, 75 to 85 %, dependent on manufacturer. At normal use there is no risk of freezing onto the rotating heat exchanger but the efficiency is maintained even during the coldest days of the year. The heat exchanger also works efficient at cool recovery. The drawback is a risk for transferring odors. A rotating heat exchanger should thus not be used for ventilation of buildings having different productivities, such as offices and workshops, when a transfer of odor is made from the "dirtier" to the "cleaner" work place. Rotating heat exchangers can however, be used for each work place per se in such a building, but then request separated ventilation systems. In a place in mid-Sweden having a normal temperature of 5,8°C over the year (Skara, Västergötland) and lowest dimensioning out door temperature of -20°C the effect requirement for after heating be reduced from 47 kW without heat exchange to 5,7 kW using a rotating heat exchanger, per m³/s. The energy consumption for after heating is, in the same calculation, 140 MWh/year without heat recovery and 8 MWh/year using a rotating heat exchanger.

Plate heat exchanger has a normal temperature efficiency of about 60 %. The construction gives the largest risk for freezing on of the said types of heat exchangers. The outlet air channel closest to the outdoor air inlet is subjected to cool outdoor air. The heat exchanger has, at a correct construction, adaptation and mounting a small risk for odor transfer.

Battery heat exchangers are dimensioned for a temperature efficiency of between 50 and 60 %. The risk for freezing on is small. By separating the apparatus with regard to inlet air and outlet air all risk for odor transfer is eliminated.

In an installation of an air treatment apparatus the effect requirement of the fan/fan system of the air treatment apparatus with the airflow taken three times. Adjusting the airflow with 10 % means a 33 % higher effect requirement and additionally an increased energy requirement of the heating system and the cooling system, respectively, to reach the correct temperature in the building. An incorrect inlet airflow has a direct influence on energy requirement for regulating the temperature. In cases of heat recovery one normally strives for a balance between inlet and outlet airflows. Both a too small as well as a too large outlet air flow increase the energy requirement to reach a correct temperature in the building. If the outlet airflow is too high the infiltration of outdoor air increases corresponding to the flow unbalance. As the airflow is the primary issue in an air treatment system then a too small an airflow is negative both to the building and the people staying there. It is thus extremely important that the airflow is correct.

More and more manufacturers of air treatment apparatuses have developed systems for monitoring airflow in the apparatuses. In the beginning separate measuring modules were developed. In order not to create great pressure drops one had to be satisfied using a monitoring pressure of less than 100 Pa. During the latest years the flow monitoring has been concentrated to the fan/fan system of the air treatment apparatus.

US-A1-2001/0007337 discloses a process and a system for controlling the mass flow in an air craft by means of a continuous recalculation of efficiency characteristics in a closed calculation system, whereby regard is taken to the pressure in the pipe system, temperature, flow volume and height above ground level. In the system there is used an air conditioning system which provides predetermined values of inlet air with regard to in particular the temperature. Control with regard to outlet temperature is lacking in such a control system to monitor the mass flow.

US-A-5,341,988 relates to a wireless air balancing system for the treatment of air in a space, such as an office space via an air conditioning apparatus arranged in said space. It is here not a question of pure air treatment apparatuses for buildings but of simple spaces where a simple air conditioning is required with regard to flow and air temperature in the space.

US-A-3,192,848 relates to an air directing system in aircrafts, and in particular for adding so called bleed air to an aircraft from an inlet line in a jet aircraft. Flow sensors in said inlet lines control the system. This patent is not related to mass flow control at the air treatment apparatus but a mere control of the inlet air to add the amount of air needed under particular conditions.

SE-C-500 361 relates to a circulation apparatus and does not relate to an air treatment system. The problem to this technical solution is to obtain a larger or smaller surface of impact of the fan depending on the temperature, i.e., to increase the speed of the fan if the temperature should increase in a space. Thus no control with regard to mass flow and a varying outdoor temperature takes place.

### Summary of the present invention

Using different control and regulating technical solutions lots of energy can be saved. Common to such solutions are that one adapts the air flow from a requirement point of view at e.g., pressure control which is used when different part systems shall be able to be closed off (e.g., in spaces which are not used, for elimination of odors in the system, and other things) without affecting the air flow to the rest of the spaces, and so that the pressure of the main channel of the air treatment system is kept constant.

### Detailed description of the present invention

The present invention relates primarily to an air treatment apparatus which is controlled by a control and regulating system and contains at least one fan, where the outdoor temperature at the inlet of the outlet air fan varies, whereby the air treatment apparatus comprises at least one temperature sensor for the registration of actual outdoor temperature,
the temperature efficiency of the heat exchanger is known,
the air treatment apparatus contains at least one registration and calculation unit which determines the mass flow through the outlet air fan to a predetermined value, and
the registration and calculation unit controls the airflow of the outlet air fan via a control means so that this predetermined value is obtained.

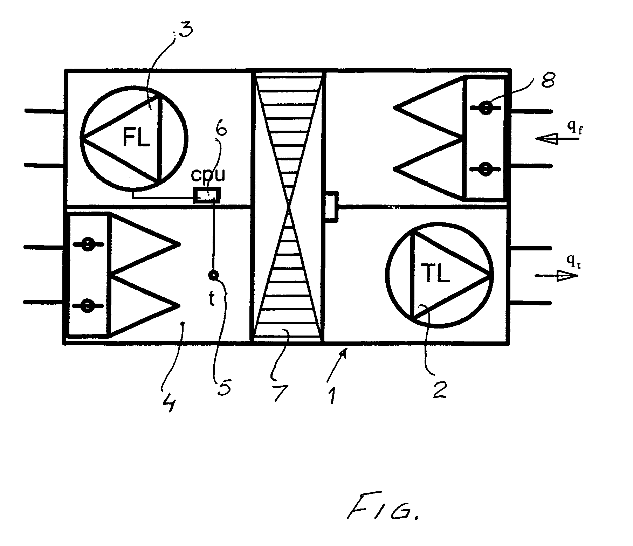

In the attached drawing an air treatment system in a fan house 1 is schematically shown comprising an inlet air fan 2 provided with air flow measurement and revolution control and an air outlet fan 3 with air flow measurement and revolution control. In the fan house 1 in connection with a channel 4 for inlet air there are temperature sensor 5 for measuring and transferring outdoor temperature. The values from the outdoor temperature sensor 5 are transferred to a control and regulation unit 6 including a registration and calculation unit. The control and regulation unit 6 hereby controls the inlet airflow qₜ and the outlet air flow q_{f}, which flows pass a rotating heat exchanger 7. Control means 8 for regulating the air flows to and fro are given schematically.

In a simple set up including one fan and one channel system the volume flow measured in m³/s constant independent of the temperature at the inlet of the fan. A change of the temperature means, however, that the density of the air changes and thereby will the mass flow in kg/s become changed. If one starts from +20°C which is the temperature at normal dimensioning to -20°C it means that the density of the air and thereby the mass flow and the effect requirement of the fan will increase with about 16 %.

Fans, which are so placed that the temperature varies over the changes of the seasons, will obtain a varying mass flow. Examples of such fans in air treatment apparatuses are outlet air fans placed after an inlet heat exchanger and then in particular after a rotating heat exchanger, which has the highest temperature yield. Another example is an inlet air fan placed in front of an optional after heating battery. However, the variation of mass flow will be reduced considerably if a heat exchanger having a high temperature yield is placed in the outdoor air prior to the fan.

In air treatment systems the mass flow will be constant in each cross section if one disregard any leakage. If the temperature of the air changes in a cross section the density of the air will be changed and the volume flow thereby, as well. An installation having differences in temperature has, with other words, different air flow (volume flow) in different cross sections. Traditionally, fans have been placed in such a way that the temperature in the inlet of the fan is constant which also leads to constant volume and mass flow in the installation. There are, however, exceptions as the outlet air fan is normally placed after an optional heat exchanger. The outlet air flow will thereby vary with great energy losses as a consequence, both as running energy to the fan and as energy to reach correct temp in the building. The consciousness of this relationship seems, however, to be small or even non-existing.

If it is supposed that in a specification it is set an inlet and outlet airflow of 1 m³/s, said volume flow is required at the density 1.2 kg/m³. If the outlet air temperature is set to 20°C, dimensioning outdoor temperature to -20°C, and the temperature yield of the heat exchanger is 80 %, it is obtained at the calculation, at lowest dimensioning outdoor temperature, a temperature of the outlet air after the heat exchanger, at the fan inlet, of -12°C, and the density 1.35 kg/m³. This leads to a volume flow of 1.12 m³/s having the density 1.2 kg/m³ at the outlet air opening if one disregards changes in pressure drops. The effect requirement of the fan will then, at running point, increase with 12 % and the heating system of the building will be loaded with 5.9 kW extra due to the increased infiltration of outdoor air.

The present invention thus relates to a combination of technical progress in a control and regulating soft ware to facilitate a desired volume flow having the density 1.2 kg/m³ (mass flow) in an air stream. Using the electronics of today reliability can be achieved as well as an acceptable cost level when it comes to a control and regulating equipment for frequency control with the intention to control e.g., the revolution speed of a fan and for a control and regulating equipment which moreover can be construed and be simply adapted to new functions depending upon need.

Within measuring technology pressure and temperature sensors been further developed and have fan and system manufacturers developed reliable systems for measuring of volume flow. Bases for being able to obtain control of an air treatment apparatus are thus present.

Measurement of airflow would be possible to carry in one plane where the variation of the temperature is minimal. This measurement can then form a base for controlling the airflow. In order to obtain accuracy long term stable, advanced flow monitoring means are required. Such flow monitoring means will, however, lead to unacceptable pressure drops, which increase the effect requirement of the fan present and normally there is lack of space in the apparatuses for a correct installation.

In an air treatment apparatus one or more temperatures are measured by temperature sensors placed in the apparatus, in particular in the inlet part of the fan(-s) present in the apparatus. The temperature sensors are placed close to the inlet(-s) of the fan(-s) or in such a way that the temperature at the inlet of the fan can be calculated with an acceptable accuracy (±3°C or less, which leads to 1 % or less influence on the air flow). For example, the outdoor and outlet air temperatures and the temperature yield of a heat exchanger are the bases for the calculation of the temperature at the inlet opening of an outlet fan, which is placed after a heat exchanger. The temperature can, via a calculation be used directly to obtain a regulation to a desired mass flow, but to guarantee the correct flow there is often a flow measurement required. Such a measurement takes normally place by indirect measurement of a pressure, which is then converted to flow. The measurement of the pressure must thereby become temperature corrected before an actual airflow can be calculated.

A desired airflow at the inlet of the fan is calculated in accordance with the present invention by temperature compensating the dimensioning airflow so that a constant mass flow is obtained. In a control and regulating system all measurements and calculations and regulation of the airflow are carried out via an outgoing signal to a suitable regulating means. The flow can be regulated, e.g., by means of throttle regulation but the most energy efficient way is the regulate the revolution speed of the fan(-s) via a control of the frequency, which is also a preferred embodiment.

Thus, the present invention obtains an air treatment apparatus which is controlled by a control and regulating system and contains at least one fan, where the temperature at the inlet of the fan varies, whereby the air treatment apparatus contains at least one temperature sensor for the registration of actual temperature, the air treatment apparatus contains a registration and calculation unit which determines the mass flow through the fan to a predetermined value, and said registration and calculation unit, via a regulating means, regulates the air flow of the fan so that this predetermined value is obtained.

Registration of the temperature via the temperature sensors can be made at short or long time period intervals, but during stable weather and surrounding conditions it is considered suitable to have a registration done every minute up to every 10 minutes. When the registration shall be done is determined by the registration and calculation unit, whereby this can contain soft ware for determination of registration frequency, which one or more soft wares are based on the size and the velocity of the changes. If, e.g., rapid temperature drops should occur control of the airflow might be done 2 times a minute, whereby thus registration must be carried out 2 times per minute as well.

According to a preferred embodiment of the present invention the air treatment apparatus comprises furthermore a means for air flow measurement, which is provided to give an outgoing signal to the registration and calculation unit for checking a set air flow.

According to another preferred embodiment of the present invention the means for air flow measurement is a pressure measuring means.

According to a further, preferred embodiment of the present invention the means for measuring airflow arranged at inlet part of the fan present in the air treatment apparatus.

According to a further other preferred embodiment of the present invention the regulation means is arranged to influence the air flow by means of a frequency control of the revolution speed of the outlet fan present in the air treatment apparatus.

According to another further preferred embodiment of the present invention the regulation means is arranged to influence the airflow by means of control of guiding rails present in the inlet of the fan house for the regulation of the rotation of the inlet air.

According to further preferred embodiment of the present invention the regulation means is arranged to influence the angle of the fan blades of axial fans for the regulation of airflow.

According to preferred embodiment of the present invention the regulation means is arranged to influence the airflow by means of influencing a throttling of the amount of inlet air to the fan(-s) present in the air treatment apparatus.

According to another preferred embodiment of the present invention the heat exchanger is a rotating heat exchanger, a plate heat exchanger or a battery heat exchanger.

According to another preferred embodiment of the present invention the air treatment apparatus further comprises a means for measurement of relative and absolute humidity, which means is arranged to provide an outgoing signal to the registration and calculation unit for control of the humidity in inlet air to said at least one fan.

According to a further other preferred embodiment of the present invention the air treatment apparatus is furthermore provided with a smoke detector arranged to provide a signal to the registration and calculation unit in order to prevent spreading of smoke coming from outside into the building. Later times larger fires in connection with densely populated areas has shown the problem with spreading of fire smoke which in some cases has contained toxic substances.

According to another preferred embodiment of the present invention at least one sensor is provided with equipment for wire less communication using a transmitter-receiver unit arranged to the registration and calculation unit.

According to a further preferred embodiment of the present invention at least one fan present in the air treatment apparatus is provided with equipment for wireless communication using a transmitter-receiver unit arranged to the registration and calculation unit and arranged to receive control information for the regulation of the transporting air flow of the fan. A transmitter-receiver unit can be based on wireless or wired communication whereby wireless communication can be maintained by means of IR waves, radio signals, or hearable or unhearable sound waves.

Further, the present invention relates to a registration and calculation unit for air treatment apparatus and comprising at least one inlet unit for receiving of measured values from at least one sensor, comprising a calculation unit for the I calculation of air flow values based on values received from the sensor, and at least one outgoing unit for the regulation of the air flow by means of an outlet fan present in the air treatment apparatus which fan is controlled to provide such a calculated air flow value. By means of this aspect of the invention it is obtained that all calculations and controls can be made immediately at occurred changes of the temperature in ingoing air to the inlet and/or outlet fans(-s) in the air treatment apparatus.

According to a preferred embodiment of this aspect of the present invention the calculation and registration unit encompasses a computer unit, such as in the form of a microprocessor with soft ware for the calculation of air flows based on values received from said at least one sensor.

According to a further, preferred embodiment of the present invention the registration and calculation unit comprises a transmitter-receiver unit for receiving of calculation values via a wireless communication for the calculation of air flows; transmittance of control signals for the regulation of the transported air flow of at least one fan present in the air treatment apparatus.

According to a further aspect of the present invention it is a process for control of the mass flow in an air treatment apparatus, whereby at least one temperature of inlet air to at least one fan present in said air treatment apparatus is determined, that said temperature is the inlet signal for a calculation, said calculation is used for control of the mass flow through said at least one fan.

According to a preferred embodiment of the present invention, furthermore, the airflow is measured and the function for control is secured in such a way. According to another preferred embodiment of this aspect of the present invention the airflow is measured via pressure measurement.

According to a further preferred embodiment of the present invention the airflow is measured at the inlet of said at least one fan.

According to another further preferred embodiment of the present invention the air flow is regulated by means of frequency control of the said at least one fan.

## Claims

1. Air treatment apparatus which is controlled by a control and regulating system with a registration and calculation unit and containing heat recovery in a heat exchanger (7) with an exhaust air fan (3), where the temperature at the fan inlet opening varies to control a air mass flow,
**characterized in**
**that** the exhaust air fan (3) is arranged after the heat exchanger in the air flow direction,
**that** the air treatment apparatus comprises at least one temperature sensor (5) for the registration of actual outdoor temperature, and a temperature sensor for the registration of actual exhaust temperature,
the temperature efficiency of the heat exchanger (7) is known,
the air treatment apparatus (1) contains at least one registration and calculation system (6) which determines the mass flow through the exhaust air fan (3) to a predetermined value based on said outdoor and exhaust temperatures and the known temperature efficiency, which calculated temperature at the fan inlet of the exhaust fan is used to determine a desired air flow at the exhaust fan, and
**that** the registration and calculation system (6), via regulating means controls the airflow (q_{f}) of the exhaust air fan (3) via a control means to obtain a predetermined mass flow so that this predetermined value is obtained to obtain a balance between inlet air flow and exhaust air flow.

2. Air treatment apparatus according to claim 1,
wherein the air treatment apparatus (1) furthermore comprises a means for airflow measurement, which is provided to give an outgoing signal to the registration and calculation unit for checking a set airflow.

3. Air treatment apparatus according to claim 2,
wherein the means for airflow measurement is a pressure measuring means.

4. Air treatment apparatus according to claim 3,
wherein the means for measuring airflow arranged at inlet part of the exhaust fan present in the air treatment apparatus.

5. Air treatment apparatus according to claim 1,
wherein the regulation means is arranged to influence the airflow by means of a frequency control of the revolution speed of the exhaust fan present in the air treatment apparatus.

6. Air treatment apparatus according to claim 1,
wherein the heat recovery is a rotating heat exchanger.

7. Air treatment apparatus according to claim 1,
wherein the heat recovery is a plate heat exchanger.

8. Air treatment apparatus according to claim 1,
wherein the heat recovery is a battery heat exchanger.

9. Air treatment apparatus according to claim 1,
wherein the regulation means is arranged to influence the airflow by means of influencing a throttling of the amount of inlet air to the exhaust fan(-s) present in the air treatment apparatus.

10. Air treatment apparatus according to claim 1,
wherein the regulation means is arranged to influence the airflow by means of control of guiding rails present in the inlet of the exhaust fan house for the regulation of the rotation of the inlet air.

11. Air treatment apparatus according to claim 1,
wherein the regulation means is arranged to influence the angle of the fan blades of axial fans for the regulation of airflow.

12. Air treatment apparatus according to one or more of the preceding claims,
wherein at least one sensor is provided with equipment for wire less communication using a transmitter-receiver unit arranged to the registration and calculation unit.

13. Air treatment apparatus according to one or more of the preceding claims,
wherein at least one fan present in the air treatment apparatus is provided with equipment for wireless communication using a transmitter-receiver unit arranged to the registration and calculation unit and arranged to receive control information for the regulation of the transporting air flow of the fan.

14. Control and regulation system for an air treatment apparatus according to claims 1-13,
wherein comprising at least one inlet unit for receiving of measured values from at least one temperature sensor for monitoring actual outdoor temperature, comprising a calculation unit for the calculation of air flow values based on values received from the said sensor and the temperature efficiency of the ingoing heat exchanger, and at least one outgoing unit for the regulation of the air flow by means of an exhaust fan present in the air treatment apparatus which exhaust fan is controlled to provide such a calculated air flow value.

15. Control and regulation system with a registration an calculation unit according to claim 14,
wherein it encompasses a computer unit, such as in the form of a microprocessor with soft ware for the calculation of airflows based on values received from said at least one sensor.

16. Control and regulation system with a registration an calculation unit according to claim 14,
whereby it comprises a transmitter-receiver unit for receiving of calculation values via a wireless communication for the calculation of air flows, transmittance of control signals for the regulation of the transported air flow of at least one fan present in the air treatment apparatus.

17. Process for control of the mass flow in an air treatment apparatus, which is controlled by a control and regulation system and containing heat recovery in a heat exchanger having a known temperature efficiency, and an exhaust air fan, where the exhaust fan is arranged after the heat exchanger in the flow direction, whereby an outdoor temperature in an inlet air of a fan present in the air treatment apparatus is determined, that said temperature is the inlet signal for a calculation, said calculation is used for control of the mass flow through said at least one exhaust fan, whereby the calculation is based on said outdoor and exhaust temperatures and the known temperature efficiency, which calculated temperature at the fan inlet of the exhaust fan is used at the calculation of a desired air flow at the exhaust fan to obtain a predetermined mass flow.

18. Process according to claim 17,
wherein, furthermore, the airflow is measured and the function for control is secured in such a way.

19. Process according to claim 17,
wherein the airflow is measured via pressure measurement.

20. Process according to claims 17-19,
wherein the airflow is measured at the inlet of said exhaust fan.

21. Process according to claim 17,
wherein the airflow is regulated by means of frequency control of the said at least one fan.

## Patentansprüche

1. Luftaufbereitungsvorrichtung, die durch ein Steuer- und Regelungssystem mit einer Registrierungs- und Berechnungseinheit gesteuert ist und eine Wärmerückgewinnung in einem Wärmetauscher (7) mit einem Abluftventilator (3) enthält, wobei die Temperatur an der Ventilatoreinlassöffnung variiert, um einen Luftmassenstrom zu steuern,
**dadurch gekennzeichnet,**
**dass** der Abluftventilator (3) in der Luftstromrichtung nach dem Wärmetauscher angeordnet ist,
**dass** die Luftaufbereitungsvorrichtung mindestens einen Temperatursensor (5) zur Registrierung einer tatsächlichen Außentemperatur und einen Temperatursensor zur Registrierung einer tatsächlichen Ablufttemperatur hat,
wobei der Temperaturwirkungsgrad des Wärmetauschers (7) bekannt ist,
wobei die Luftaufbereitungsvorrichtung (1) mindestens ein Registrierungs- und Berechnungssystem (6) enthält, das den Massenstrom durch den Abluftventilator (3) auf Grundlage der Außen- und Ablufttemperaturen und der bekannten Temperatureffizienz auf einen vorbestimmten Wert bestimmt, welche berechnete Temperatur am Ventilatoreinlass des Abluftventilators dazu verwendet wird, einen gewünschten Luftstrom am Abluftventilator zu bestimmen, und
**dass** das Registrierungs- und Berechnungssystem (6) über Regelungseinrichtungen den Luftstrom (qᵣ) des Abluftventilators (3) über eine Steuereinrichtung steuert, um einen vorbestimmten Massenstrom zu erzielen, so dass dieser vorbestimmte Wert erzielt wird, um eine Balance zwischen Zuluftstrom und Abluftstrom zu erzielen.

2. Luftaufbereitungsvorrichtung nach Anspruch 1,
wobei die Luftaufbereitungsvorrichtung (1) darüber hinaus eine Einrichtung zur Luftstrommessung hat, die vorgesehen ist, um ein Ausgangssignal an die Registrierungs- und Berechnungseinheit zum Prüfen eines Sollluftstroms auszugeben.

3. Luftaufbereitungsvorrichtung nach Anspruch 2,
wobei es sich bei der Einrichtung zur Luftstrommessung um eine Druckmesseinrichtung handelt.

4. Luftaufbereitungsvorrichtung nach Anspruch 3,
wobei die Einrichtung zur Luftstrommessung an einem Einlassteil des Abluftventilators angeordnet ist, der in der Luftaufbereitungsvorrichtung vorhanden ist.

5. Luftaufbereitungsvorrichtung nach Anspruch 1,
wobei die Regelungseinrichtung angeordnet ist, um den Luftstrom mittels einer Frequenzsteuerung der Drehzahl des Abluftventilators zu beeinflussen, der in der Luftaufbereitungsvorrichtung vorhanden ist.

6. Luftaufbereitungsvorrichtung nach Anspruch 1,
wobei es sich bei der Wärmerückgewinnung um einen Rotationswärmetauscher handelt.

7. Luftaufbereitungsvorrichtung nach Anspruch 1,
wobei es sich bei der Wärmerückgewinnung um einen Plattenwärmetauscher handelt.

8. Luftaufbereitungsvorrichtung nach Anspruch 1,
wobei es sich bei der Wärmerückgewinnung um einen Blockwärmetauscher handelt.

9. Luftaufbereitungsvorrichtung nach Anspruch 1,
wobei die Regelungseinrichtung angeordnet ist, um den Luftstrom mittels einer Beeinflussung einer Drosselung der Menge an Zuluft zu dem/den Abluftventilator/en zu beeinflussen, der/die in der Luftaufbereitungsvorrichtung vorhanden ist/sind.

10. Luftaufbereitungsvorrichtung nach Anspruch 1,
wobei die Regelungseinrichtung angeordnet ist, um den Luftstrom mittels einer Steuerung von Führungsschienen zu beeinflussen, die im Einlass des Abluftventilatorgehäuses zur Regelung der Rotation der Zuluft vorhanden sind.

11. Luftaufbereitungsvorrichtung nach Anspruch 1,
wobei die Regelungseinrichtung angeordnet ist, um den Winkel der Ventilatorflügel von Axialventilatoren zur Luftstromregelung zu beeinflussen.

12. Luftaufbereitungsvorrichtung nach einem oder mehreren der vorhergehenden Ansprüche,
wobei mindestens ein Sensor mit einer Ausrüstung zur drahtlosen Kommunikation unter Verwendung einer Sender-Empfänger-Einheit versehen ist, die der Registrierungs- und Berechnungseinheit zugeordnet ist.

13. Luftaufbereitungsvorrichtung nach einem oder mehreren der vorhergehenden Ansprüche,
wobei mindestens ein in der Luftaufbereitungsvorrichtung vorhandener Ventilator mit einer Vorrichtung zur drahtlosen Kommunikation unter Verwendung einer Sender-Empfänger-Einheit versehen ist, die der Registrierungs- und Berechnungseinheit zugeordnet und angeordnet ist, um Steuerinformationen zur Regelung des Förderluftstroms des Ventilators zu empfangen.

14. Steuer- und Regelungssystem für eine Luftaufbereitungsvorrichtung nach den Ansprüchen 1 bis 13,
umfassend mindestens eine Einlasseinheit zum Empfangen von Messwerten von mindestens einem Temperatursensor zum Überwachen einer tatsächlichen Außentemperatur,
umfassend eine Berechnungseinheit zur Berechnung von Luftstromwerten auf Grundlage von vom Sensor empfangenen Werten und beruhend auf dem Temperaturwirkungsgrad des Eingangswärmetauschers, und mindestens eine Ausgangseinheit zur Regelung des Luftstroms mittels eines in der Luftaufbereitungsvorrichtung vorhandenen Abluftventilators, welcher Abluftventilator gesteuert wird, um einen derartigen berechneten Luftstromwert bereitzustellen.

15. Steuer- und Regelungssystem mit einer Registrierungs- und Berechnungseinheit nach Anspruch 14,
wobei es eine Computereinheit wie etwa in Form eines Mikroprozessors mit einer Software zur Berechnung von Luftströmen auf Grundlage von Werten umfasst, die von dem mindestens einen Sensor empfangen werden.

16. Steuer- und Regelungssystem mit einer Registrierungs- und Berechnungseinheit nach Anspruch 14,
wobei es eine Sender-Empfänger-Einheit zum Empfangen von Berechnungswerten über eine drahtlose Kommunikation zur Berechnung von Luftströmen, Übertragung von Steuersignalen zur Regelung des Förderluftstroms mindestens eines in der Luftaufbereitungsvorrichtung vorhandenen Ventilators umfasst.

17. Verfahren zur Steuerung des Massenstroms in einer Luftaufbereitungsvorrichtung, die durch ein Steuer- und Regelungssystem gesteuert wird und eine Wärmerückgewinnung in einem Wärmetauscher mit einem bekannten Temperaturwirkungsgrad und einen Abluftventilator enthält, wobei der Abluftventilator in der Strömungsrichtung nach dem Wärmetauscher angeordnet ist, wodurch eine Außentemperatur in einer Zuluft eines in der Luftaufbereitungsvorrichtung vorhandenen Ventilators bestimmt wird, dass die Temperatur das Eingangssignal für eine Berechnung ist, die Berechnung zur Steuerung des Massenstroms durch den mindestens einen Abluftventilator verwendet wird, wobei die Berechnung auf den Außen- und Ablufttemperaturen und dem bekannten Temperaturwirkungsgrad beruht, welche berechnete Temperatur am Ventilatoreinlass des Abluftventilators bei der Berechnung eines gewünschten Luftstroms am Abluftventilator verwendet wird, um einen vorbestimmten Massenstrom zu erzielen.

18. Verfahren nach Anspruch 17,
wobei darüber hinaus der Luftstrom gemessen und die Funktion zur Steuerung dadurch sichergestellt wird.

19. Verfahren nach Anspruch 17,
wobei der Luftstrom über Druckmessung gemessen wird.

20. Verfahren nach den Ansprüchen 17 bis 19,
wobei der Luftstrom am Einlass des Abluftventilators gemessen wird.

21. Verfahren nach Anspruch 17,
wobei der Luftstrom mittels Frequenzsteuerung des mindestens einen Ventilators geregelt wird.

## Revendications

1. Appareil de traitement de l'air commandé par un système de commande et de régulation avec une unité de repérage et de calcul et contenant une récupération de chaleur dans un échangeur de chaleur (7) muni d'un ventilateur d'air expulsé (3), où la température à l'entrée du ventilateur varie pour commander un débit d'air massique,
**caractérisé**
**en ce que** le ventilateur d'air expulsé (3) est placé après l'échangeur de chaleur dans la direction du flux d'air,
**en ce que** l'appareil de traitement de l'air comprend au moins un capteur de température (5) pour le repérage de la température extérieure courante, et un capteur de température pour le repérage de la température de sortie courante,
le rendement en température de l'échangeur de chaleur (7) est connu,
l'appareil de traitement de l'air (1) contient au moins un système de repérage et de calcul (6) qui détermine le débit massique traversant le ventilateur d'air expulsé (3) sur une valeur prédéterminée basée sur ladite température extérieure et ladite température de sortie et sur le rendement en température connu, laquelle température calculée à l'entrée du ventilateur d'air expulsé est utilisée pour déterminer un débit d'air voulu au niveau du ventilateur d'air expulsé, et
**en ce que** le système de repérage et de calcul (6) commande, par l'intermédiaire d'un moyen de régulation, le débit d'air (q_{f}) du ventilateur d'air expulsé (3) par l'intermédiaire d'un moyen de commande pour obtenir un débit massique prédéterminé, de sorte que cette valeur prédéterminée est obtenue, pour obtenir un équilibre entre le débit d'air entrant et le débit d'air sortant.

2. Appareil de traitement de l'air selon la revendication 1, dans lequel l'appareil de traitement de l'air (1) comprend en outre un moyen permettant la mesure d'un débit d'air, qui est prévu pour donner un signal de sortie à l'unité de repérage et de calcul afin de contrôler un débit d'air réglé.

3. Appareil de traitement de l'air selon la revendication 2, dans lequel le moyen de mesure de débit d'air est un moyen de mesure de pression.

4. Appareil de traitement de l'air selon la revendication 3, dans lequel le moyen de mesure de débit d'air est placé dans la partie entrée du ventilateur d'air expulsé présent dans l'appareil de traitement de l'air.

5. Appareil de traitement de l'air selon la revendication 1, dans lequel le moyen de régulation est agencé pour influer sur le débit d'air au moyen d'une commande en fréquence de la vitesse de rotation du ventilateur d'air expulsé présent dans l'appareil de traitement de l'air.

6. Appareil de traitement de l'air selon la revendication 1, dans lequel la récupération de chaleur est un échangeur de chaleur rotatif.

7. Appareil de traitement de l'air selon la revendication 1, dans lequel la récupération de chaleur est un échangeur de chaleur à plaques.

8. Appareil de traitement de l'air selon la revendication 1, dans lequel la récupération de chaleur est un échangeur de chaleur à batterie.

9. Appareil de traitement de l'air selon la revendication 1, dans lequel le moyen de régulation est agencé pour influer sur le débit d'air au moyen d'une action sur l'étranglement de la quantité d'air entrant dans le ou les ventilateur(s) d'air expulsé présent(s) dans l'appareil de traitement de l'air.

10. Appareil de traitement de l'air selon la revendication 1, dans lequel le moyen de régulation est agencé pour influer sur le débit d'air au moyen d'une commande de rails de guidage présents en entrée du boîtier de ventilateur d'air expulsé pour la régulation de la rotation de l'air entrant.

11. Appareil de traitement de l'air selon la revendication 1, dans lequel le moyen de régulation est agencé pour influer sur l'angle des ailettes de ventilateurs axiaux pour la régulation du débit d'air.

12. Appareil de traitement de l'air selon l'une ou plusieurs des revendications précédentes, dans lequel au moins un capteur est pourvu d'un équipement permettant la communication sans fil en utilisant un émetteur-récepteur placé sur l'unité de repérage et de calcul.

13. Appareil de traitement de l'air selon l'une ou plusieurs des revendications précédentes, dans lequel au moins un ventilateur présent dans l'appareil de traitement de l'air est pourvu d'un équipement permettant la communication sans fil en utilisant un émetteur-récepteur placé sur l'unité de repérage et de calcul et agencé pour recevoir des informations de commande pour la régulation du débit d'air de transport du ventilateur.

14. Système de commande et de régulation pour appareil de traitement de l'air selon les revendications 1 à 13, comprenant au moins une unité d'entrée pour recevoir des valeurs mesurées provenant d'au moins un capteur de température pour surveiller la température extérieure courante, comprenant une unité de calcul pour le calcul de valeurs de débit d'air basées sur des valeurs transmises par ledit capteur et le rendement en température de l'échangeur de chaleur d'entrée, et au moins une unité de sortie pour la régulation du débit d'air au moyen d'un ventilateur d'air expulsé présent dans l'appareil de traitement de l'air, lequel ventilateur d'air expulsé est commandé pour donner une telle valeur de débit d'air calculée.

15. Système de commande et de régulation avec une unité de repérage et de calcul selon la revendication 14, dans lequel il est prévu une unité d'ordinateur, comme sous la forme d'un microprocesseur avec logiciel pour le calcul de débits basé sur des valeurs transmises par ledit au moins un capteur.

16. Système de commande et de régulation avec une unité de repérage et de calcul selon la revendication 14, comprenant un émetteur-récepteur permettant la réception de valeurs de calcul via une communication sans fil pour le calcul de débits, la transmission de signaux de commande pour la régulation du flux d'air transporté d'au moins un ventilateur présent dans l'appareil de traitement de l'air.

17. Procédé de commande du débit massique dans un appareil de traitement de l'air, qui est commandé par un système de commande et de régulation et contenant une récupération de chaleur dans un échangeur de chaleur ayant un rendement en température connu, et un ventilateur d'air expulsé, le ventilateur d'air expulsé étant placé après l'échangeur de chaleur dans la direction du flux, moyennant quoi une température extérieure dans un air de sortie d'un ventilateur présent dans l'appareil de traitement de l'air est déterminée, ladite température étant le signal d'entrée pour un calcul, ledit calcul étant utilisé pour la commande du débit massique à travers ledit au moins un ventilateur d'air expulsé, dans lequel le calcul est basé sur ladite température extérieure et sur ladite température de sortie et sur le rendement en température connu, laquelle température calculée en entrée du ventilateur d'air expulsé étant utilisée dans le calcul d'un débit d'air voulu au niveau du ventilateur d'air expulsé pour obtenir un débit massique prédéterminé.

18. Procédé selon la revendication 17, dans lequel, en outre, le débit d'air est mesuré et la fonction de commande est assurée de cette manière.

19. Procédé selon la revendication 17, dans lequel le débit d'air est mesuré par l'intermédiaire d'une mesure de pression.

20. Procédé selon les revendications 17 à 19, dans lequel le débit d'air est mesuré en entrée dudit ventilateur d'air expulsé.

21. Procédé selon la revendication 17, dans lequel le débit d'air est régulé au moyen d'une commande en fréquence dudit au moins un ventilateur.
